# EUROPÄISCHE PATENTSCHRIFT

(11) **EP 1 249 992 B1**
(45) Veröffentlichungstag und Bekanntmachung des Hinweises auf die Patenterteilung: **20.06.2012**
(21) Anmeldenummer: 02100363.7
(22) Anmeldetag: 10.04.2002
(51) Int. Cl.: H04M 3/493

(54) **Verfahren zum Betrieb eines automatischen Branchen-Auskunftssystems**
Method of operating an automated directory of businesses system
Procédé pour la gestion d'un système d'annuaire par professions automatiques

(30) Priorität: 11.04.2001 DE 10118127
(43) Veröffentlichungstag der Anmeldung: 16.10.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Hodam, Henrik, 52066, Aachen (DE); Lenke, Nils, 52066, Aachen (DE)
(74) Vertreter: Atkinson, Jonathan David Mark

(56) Entgegenhaltungen:
- EP-A- 0 924 916
- US-A- 5 543 789
- US-A- 5 727 057
- US-A- 6 108 533

## Beschreibung

Die Erfindung betrifft ein Verfahren zum Betrieb eines automatischen Branchen-Auskunftssystems, bei welchem anhand von Suchparametern, die mittels eines Endgeräts eines Nutzers an das System übermittelt werden, Anbieter einer gewünschten Branche gesucht werden, deren in einer Datenbank des Systems gespeicherte Teilnehmerdaten den Suchparametern entsprechen, und bei dem dann die Teilnehmerdaten zumindest eines gefundenen Anbieters an den Nutzer ausgegeben werden. Darüber hinaus betrifft die Erfindung ein entsprechendes automatisches Branchen-Auskunftssystem.

Derartige Verfahren bzw. Branchen-Auskunftssysteme sind beispielsweise unter dem Namen "Gelbe -Seiten -Service" oder "Yellow-Page -Service" bekannt. Mittels eines solchen Service kann sich jeder Nutzer über mögliche Anbieter einer gewünschten Branche, beispielsweise Ärzte, Handwerker oder sonstige Firmen, aber auch über öffentliche Einrichtungen wie Polizeidienststellen, Schwimmbäder, Schulen etc. informieren. Der Begriff Branche ist in dieser Schrift entsprechend allgemein zu verstehen. Am bekanntesten sind derartige Branchen-Auskunftssysteme über das Telefon, d. h in Form von spezialisierten Fernsprechauskünften. Darüber hinaus gibt es aber auch bereits derartige Auskunftssysteme in Datennetzen, beispielsweise im Internet oder in Intranets Bei den Endgeräten handelt es sich je nach Art des Auskunftssystems entweder um ein Telefon, ein Mobilfunkgerät, einen Computer oder einen Organizer etc. mit einer entsprechenden Telefonfunktion oder - bei Verwendung eines Auslsystems in einem reinen Datennetz - um PC's oder Organizer oder Mobilfunkgeräte mit entsprechenden Zugriffsmöglichkeiten auf das jeweilige Netz, beispielsweise WAP-Handys. Bei den Suchparametern handelt es sich um verschiedene Suchkriterien, z. B. die Branche, den Spezialbereich oder den Ort bzw. um die jeweils zugehörigen Suchbegriffe, z. B. "Ärzte" oder "Homöopathie" oder "München". Bei den Teilnehmerdaten kann es sich beispielsweise um die Telefonnummer, die Adresse oder eine sonstige Information handeln, die es dem Nutzer ermöglicht, mit dem jeweiligen am Auslsystem teilnehmenden, d. h. in der Datenbank des Auskunftssystems aufgenommenen Anbieter in Kontakt zu treten bzw. zu dem jeweiligen Anbieter zu gelangen. Außerdem ist bei einem komfortablen Branchen-Auskunftssystem auch eine sofortige Vermittlung des jeweiligen Nutzers an einen gefundenen Anbieter möglich, sofern der Nutzer dies wünscht (sogenannter Call-Transfer).

In vielen Fällen ist der Nutzer nicht daran interessiert, besonders viele verschiedene Anbieter genannt zu bekommen, sondern sein Hauptinteresse liegt darin, möglichst den nächstliegenden bzw. mehrere möglichst nahe an seinem derzeitigen Standort liegende Anbieter einer gewünschten Branche genannt zu bekommen. Dies ist insbesondere immer dann sinnvoll, wenn innerhalb eines Auskunftssystems, beispielsweise in einer Stadt, mehrere hundert Anbieter existieren und nicht anzunehmen ist, dass der Nutzer einen längeren Weg zurücklegen möchte, um einen Dienst in Anspruch zu nehmen. So ist beispielsweise in der Regel davon auszugehen, dass ein Nutzer nicht quer durch die ganze Stadt fahren möchte, um einfach in einer Bäckerei Brötchen zu kaufen. Andererseits ist es bei einer großen Zahl von ausgegebenen Anbietern für den Nutzer äußerst schwierig, sich selber den nächstliegenden Anbieter herauszusuchen, insbesondere dann, wenn ihm ggf. auch die jeweilige Ortskenntnis fehlt. Ein selbständiges Heraussuchen des räumlich am günstigsten gelegenen Anbieters wird umso schwieriger, wenn nicht fast unmöglich, wenn es sich um eine reine Telefonauskunft handelt, bei der nur eine akustische Ausgabe der verschiedenen Anbieter hintereinander erfolgt.

In der WO 99/51017 wird ein spezielles Verfahren zur Anrufweiterleitung an die nächstgelegene Filiale einer Anbieterkette, beispielsweise einer Pizza-Bringdienst-Kette, beschrieben. Hierbei geht es um ein sogenanntes "One-number"-System, bei dem der Nutzer nur eine allgsmein gültige Nummer der Anbieterkette, beispielsweise eine "0800"-Nummer, anruft und jeweils automatisch mit einer der nächstliegenden Filialen verbunden wird, welche das Gebiet, in dem sich der Anrufer befindet bzw. in dem er beliefert werden möchte, bedient. Hierzu wird zum einen die Möglichkeit genannt, eine Abstandsmessung in Form eines Punkt-zu-Punkt-Abstands zwischen den Koordinaten des Standorts des jeweiligen Nutzers und den bekannten Koordinaten der Filialen, d.h. die reine Luftlinienentfernung, zu ermitteln. Dieses Verfahren hat jedoch den Nachteil, dass nicht sichergestellt ist, dass die Filiale, welche bezüglich des direkten Abstands am nächsten am Anbieter liegt, auch unbedingt tatsächlich der nächstliegende Anbieter ist, den man in kürzester Zeit erreichten kann. Beispielsweise könnten der Standort der jeweiligen Filiale und der Standort des Nutzers durch einen Fluss, eine Autobahn oder ein anderes nur schwer überwindbares Hindernis getrennt sein, so dass der tatsächliche Weg um ein Produkt auszuliefern bzw. um zum Anbieter zu gelangen, erheblich länger ist als zu einer Filiale, die bezüglich der Luftlinie water entfernt ist. In der WO 99/51017 wird außerdem vorgeschlagen, für die einzelnen Filialen "Abdeckungsbereiche" festzulegen, in denen sie jeweils Kunden beliefern, und bei der Durchschaltung des ankommenden Anrufs eines Nutzers diese Abdeckungsbereiche der einzelnen Filialen zu berücksichtigen Dieses Verfahren führt j edoch ebenfalls nicht dazu, dass ein beliebiger Nutzer, welcher einen nächstgelegenen, beliebigen Anbieter einer bestimmten Branche erfahren möchte, tatsächlich den Anbieter genannt bekommt, den er am schnellsten oder günstigsten erreichen kann.

Die US 6,108,533 beschreibt eine geografische Datenbank, die mit einem Mobilfunknetz verbunden ist, das Informationen über Kundendienste innerhalb des Netzwerks über eine Mehrzahl von geografischen Bereichen enthält, in die der Oberflächenbereich des Netzwerks unterteilt ist. Wenn die Mobilstation Information von der Datenbank holen möchte, dann wird die Datenbank mit den Suchtasten und anhand des aktuellen Standorts der Mobilstation durchsucht und der Mobilstation werden Informationen über verfügbare Kundendienste in unterschiedlichen Zonen zurückgegeben, die sich aus geografischen Bereichen in der Nähe ihres aktuellen Standorts zusammensetzen.

Die US 5,543,789 stellt ein Verfahren und ein System zum Senden von Wegführungsinformationen von einer Basiseinheit zu einer Ferneinheit als Reaktion auf eine Anforderung von der Ferneinheit bereit. Nach eine Abfrage von der Ferneinheit werden Wegführungsinformationen auf der Basiseinheit mit Hilfe einer auf der Basiseinheit befindlichen Datenbank berechnet. Eine Antwort auf die Abfrage einschließlich Wegführungsinformationen wird an der Basiseinheit formuliert und dann von der Basiseinheit zur Ferneinheit zur Anzeige übermittelt.

Die EP 0924916 beschreibt ein Verfahren zum Austauschen von Informationen zwischen einem Teilnehmer des Telekommunikationsnetzes und dem Dienst, wobei der Dienst Ortsinformationen über den Standort des Endgerätes des Teilnehmers gibt. Nach dem Anschließen an den Dienst sendet der Teilnehmer ein Suchwort, das von dem Dienst zum Durchsuchen einer Datenbank in Kombination mit den Standortinformationen verwendet wird. Das Suchergebnis wird zum Teilnehmer gesendet.

Die US 5,727,057 beschreibt ein Verfahren und eine Systemarchitektur zum Speichern, Übertragen, Übermitteln von und Zugreifen auf mit Telefoniesystemen verknüpfte(n) geografische(n) Positionsdaten. Innerhalb des öffentlichen Telefonnetzes (PSTN) werden die geografischen Positionen (Orts-ID) jedes stationären Telefons in eine Datenbank gesetzt. In Funktelefonnetzen wird die Orts-ID als Teil des periodischen Inband-Steuerkanals "keep alive" oder eines äquivalenten Signals von Mobiltelefoniegeräten übertragen. In beiden obigen Szenarios werden dann verschiedenen Teilnehmern Zugriffsdienste bereitgestellt, mit denen sie die Orts-ID von einem beliebigen bestimmten Datenbankeintrag nach Telefon-ID abfragen und empfangen können. Andere verwandte Dienste sind mit einer von mehreren Kommunikationsmethoden lieferbar und es kann über Datenbankabfragen auf der Basis von Telefon-ID, Orts-ID oder einer Kombination davon zugegriffen werden.

Es ist Aufgabe der vorliegenden Erfindung, ein Verfahren zum Betrieb eines automatischen Branchen-Auskunftssystems bzw. ein Branchen-Auskunftssystem zu schaffen, bei dem jeweiligen Nutzer die von ihm gesuchten Informationen auf möglichst komfortable und insbesondere für den Nutzer auf zeitlich ökonomische Weise übermittelt werden.

Diese Aufgabe wird durch ein Verfahren gemäß Patentanspruch 1 bzw. Durch ein automatisches Branchen-Auskunftssystem gemäß Patentanspruch 11 gelöst.

Erfindungsgemäß werden zum einen Informationen über den aktuellen Standort des Endgeräts des Nutzers sowie Informationen über die Standorte der gefundenen Anbieter ermittelt. Anhand dieser Standortinformationen wird dann für jeden der Anbieter zumindest ein räumliches Entfernungsmaß ermittelt, wobei es sich um ein Entfernungsmaß handelt, welches einer vom Anbieter zum Nutzer in einem gegebenen Verkehrsnetz mit einem gegebenen Verkehrsmittel zurückzulegenden Wegstrecke entspricht. Alternativ kann es sich dabei auch um die mit dem jeweiligen Verkehrsmittel benötigte Zeit handeln. Es können aber auch beide Entfernungsmaße, d. H. die Wegstrecke und die Zeit, ermittelt und alternativ verwendet werden. Der Begriff "Verkehrsmittel" umfasst hierbei im Übrigen nicht nur Kfz, Fahrräder, Motorräder oder dgL, sondern auch die Zurücklegung eines Wegs zu Fuß oder mit öffentlichen Verkehrsmitteln.

Die Ausgabe der Teilnehmerdaten der jeweiligen Anbieter erfolgt dann in Abhängigkeit von den dazugehörigen Entfernungsmaßen. Hierbei kann es sich zum einen darum handeln, dass die jeweiligen Anbieter bezüglich ihres Entfernungsmaßes sortiert ausgegeben werden, beispielsweise in der Weise, dass, je geringer die Entfernung zum Anbieter ist, desto höher die Priorität bei der Ausgabe gewählt wird. Es kann aber auch eine Selektion durchgeführt werden, welche Anbieter ausgegeben werden. Hierzu kann die Zahl der Anbieter auf eine Maximalzahl von ausgegebenen Anbietern begrenzt werden und/oder es werden nur Anbieter ausgegeben, welche sich innerhalb einer bestimmten Entfernung vom Nutzer befinden, d.h. Anbieter, deren Entfernungsmaß unterhalb eines vorgegebenen Maximalwerts liegt. Im Extremfall wird sogar nur ein Anbieter ausgegeben.

Der Nutzer bekommt auf diese Weise (nur) die nächstgelegene Firma bzw. die Firmen genannt, die zu seinen eingegebenen Suchparametern, beispielsweise der Branche und des Spezialgebiets, passen. Hierbei hat der Nutzer den Vorteil, dass es sich tatsächlich um die Anbieter handelt, die von ihm unter realen Bedingungen auf kürzestem Wege und/oder in der kürzesten Zeit erreichbar sind.

Um Informationen über den Standort des Nutzers zu erhalten, können die verschiedensten Informationsquellen genutzt werden. Eine Möglichkeit besteht in der Verwendung des sogenannten "Calling-Line-ID"-Verfahrens (CLID). Hierbei wird eine Telefondatenbank in der umgekehrten Richtung verwendet, um anhand der Nummer die Adresse des Anrufers zu erhalten. Die Nummer wird in der Regel vom Telefonprovider ohnehin mit übermittelt, sofern der Anrufer nicht eine Rufnummernunterdrückung eingeschaltet hat. Es kann so direkt der Standort des Nutzers bzw. des Endgeräts ermittelt werden. Alternativ wird der aktuelle Standort, beispielsweise die Adresse, vom Nutzer erfragt. Weitere Möglichkeiten bestehen darin, sofern es sich bei dem Endgerät des Nutzers um ein Mobilfunkgerät handelt, ein Mobilfunkstandort-Ermittlungssystem zu verwenden, welches beispielsweise Informationen über die aktuell genutzte Mobilfunkzelle übermittelt oder welches mittels GPS-unterstützter oder ähnlicher Systeme arbeitet, um den Standort des Mobiltelefons zu erfahren.

Die Ortsinformationen über den jeweiligen Anbieter sind in der Regel ohnehin in der Datenbank mit den Teilnehmerdaten der Anbieter enthalten, da diese ja üblicherweise auch die Adresse enthalten. Aus den Adressen lassen sich mit einem geeigneten Ortsplan gegebenenfalls benötigte Koordinaten erzeugen.

Bei einem besonders bevorzugten Ausrührungsbeispiel erfolgt die Abfrage der Suchparameter und/oder die Steuerung des automatischen Branchen-Auskunftssystems durch den Nutzer unter Verwendung eines Nutzer-Dialogsystems, welches eine automatische Spracherkennung und Mittel zur Ausgabe von Eingabeaufforderung und/oder gefundenen Teilnehmerdaten des gewünschten Teilnehmers aufweist. Dieses Nutzer-Dialogsystem kann beispielsweise durch einen Server mit einer geeigneten Software realisiert werden, wobei in dieser Software neben der Menüführung eine Spracherkennungssoftware zur Erkennung der, z. B. über die Telefonverbindung, empfangenen Sprache des Nutzers enthält. Um die Eingabeaufforderung - beispielsweise eine Aufforderung wie "Geben Sie die gesuchte Branche ein" - oder aber die gsfundenen Teilnehmerdaten des jeweiligen Anbieters auszugaben, kann eine beliebige Sprachausgabeeinrichtung verwendet werden. Beispielsweise kann hierzu ein Sprachsynthesizer, welcher aus Sprachbruchstücken das gewünschte auszugebende Wort oder den gewünschten auszugäbenden Satz zusammenstellt, verwendet werden. Ebenso können auch in Sound-Dateien vorgespeicherte Antworten verwendet werden, die entsprechend aus einer Datenbank von der Menürührungssoftware ausgewählt und aufgerufen werden.

Die Steuerung kann durch den Nutzer mittels dieses Nutzer-Dialogsystems entweder mittels gesehenen Steuerungsbefehlen, beispielsweise "Jetzt suchen" oder "Weiteren Anbieter ausgeben", erfolgen. Es ist aber auch möglich, eine Steuerung durch Druck auf Tasten des Endgeräts, beispielsweise mittels den üblicherweise an einem Telefon vorhandenen DTMF-Tasten (Dual Tone Multi Frequency) durchzuführen. Es ist auch eine Kombination der verschiedenen Steuerungsarten, d. h eine Kombination von gesprochenen Steuerungsbefehlen und Tastendrucksteuerungsbefehlen, möglich.

Ein erfindungsgemäßes automatisches Branchen-Auskunftssystem benötigt zum einen eine Datenbank, in der die Teilnehmerdaten der Anbieter gespeichert sind Darüber hinaus benötigt es Mittel zur Eingabe von Suchparametern, eine Sucheinrichtung zum Suchen der Teilnehmer bzw. Teilnehmerdaten in der Datenbank unter Verwendung der Suchparameter und Mittel zur Ausgabe von Teilnehmerdaten. Bei den Mitteln zur Eingabe der Suchparameter und den Mitteln zur Ausgabe der Teilnehmerdaten handelt es sich beispielsweise um eine Netzanschlussstelle, um über ein Fernsprech- oder ein Datennetz mit einem Endgerät des Nutzers in Verbindung zu treten, und ein entsprechendes Dialogsystem, so dass der Nutzer mit seinem Endgerät mit der Sucheinrichtung kommunizieren kann. Weiterhin benötigt dieses Branchen-Auskunftssystem Mittel zur Gewinnung der Informationen der aktuellen Standorte des Nutzers und der Anbieter. Darüber hinaus benötigt es eine Wegstreckenermittlungseinrichtung, um die jeweiligen Wegstrecken zwischen Anbietern und Nutzer zu ermitteln.

Als Wegstreckenermittlungseinrichtung kann im Prinzip ein handelsübliches Navigationssystem bzw. handelsübliche Navigationssoftware verwendet werden, wie sie beispielsweise auch in Kfz-Navigationssystemen verwendet wird. Solche Navigationssysteme sind in der Lage sowohl den zurückzulegenden genauen Weg zu ermitteln, als auch eine mittlere Zeit abzuschätzen, die für die Zurücklegung des Weges benötigt wird Sofern das System in der Lage sein soll, die benötigte Zeit zur Zurücklegung eines Weges zu berechnen und hierbei auch öffentliche Verkehrsmittel berücksichtigt werden sollen, ist es sinnvoll, wenn das System Zugriff auf eine Datenbank hat, in der die Fahrpläne der verschiedenen öffentlichen Verkehrsmittel hinterlegt sind Bei einem besonders komfortablen System werden bei der Berechnung der Zeiten, die benötigt werden, um eine bestimmte Wegstrecke zurückzulegen, ggf. auch von der jeweiligen Tageszeit oder dem Wochentag etc. abhängige spezifische Gegebenheiten, z. B. Verkehrsdichten etc., berücksichtigt.

Darüber hinaus wird eine Selektions- und/oder Sortiereinrichtung benötigt, um in Abhängigkeit von den durch die Wegstreckenermittlungseinrichtung ermittelten Entfernungsmaßen die Teilnehmerdaten der gefundenen Anbieter auszuwählen und zu sortieren. Auch diese Selektions- und/oder Sortiereinrichtung kann in Form von Software auf einem geeigneten Rechner realisiert sein. Vorzugsweise sind die Wegstreckenermittlungseinrichtung die Selektions- und/oder Sortiereinrichtung gemeinsam mit der Sucheinrichtung und ggf. auch dem Dialogsystem sowie den benötigten Datenbanken auf einem gemeinsamen, über ein Fernsprech- oder Datennetz erreichbaren Server in Form von Software oder ggf. auch teilweise in Form von Hardware, z.B. durch geeignete Steckkarten oder Ähnliches, implementiert. Ebenso können auch die Einrichtung zur Ermittlung der Standortinformationen, beispielsweise eine CLID-Einrichtung um aus der Telefonnummer die Adresse zu erfahren, mit der dazugehörigen Datenbank und die Netzanschlussstelle des gesamten Systems in einem solchen Server integriert sein.

Vorzugsweise erfolgt die Ausgabe der Teilnehmerdaten der jeweiligen Anbieter nach Vorgabe des Nutzers, wahlweise in Abhängigkeit von der Länge der Wegstrecke oder in Abhängigkeit von der benötigten Zeit zum Zurücklegen der Wegstrecke. D. h der Nutzer kann vorab durch einen entsprechenden Steuerbefehl angeben, ob er den schnellsten
oder kürzesten Weg wissen will. Je nach Verkehrsmittel stimmen nämlich die Anbieter, die am schnellsten erreichbar sind, nicht unbedingt mit den Anbietern, die auf dem kürzesten Weg erreichbar sind, überein. So ist es durchaus möglich, dass bei Verwendung eines Autos ein Anbieter, der über die Autobahn zu erreichen ist, zwar schneller erreicht werden kann, jedoch der effektive Weg dorthin länger ist als zu einem Anbieter, bei dem der Nutzer, mehrere Ampelkreuzungen überqueren muss.

Neben der Sortierung und/oder Selektion und Ausgabe der Teilnehmerdaten der jeweiligen Anbieter an den Nutzer in Abhängigkeit von den dazugehörigen Entfernungsmaßen kann an den Nutzer auch das Entfernungsmaß selber ausgegeben werden. Das heißt, der Nutzer erhält dann nicht nur die Telefonnummer und beispielsweise die Adresse des Anbieters, sondern auch gleich die zurückzulegende Wegstrecke und/oder die dazu mit einem bestimmten Verkehrsmittel benötigte Zeit genannt.

Bei einem besonders komfortablen Ausrührungsbeispiel des erfindungsgemäßen Verfahrens werden außer den gewünschten Teilnehmerdaten auch die ermittelten Standorte, beispielsweise in Form von Koordinaten und/oder die Wegstrecken, d. h. eine komplette Wegbeschreibung, ausgegeben. Dies kann beispielsweise auch auf Wunsch des Nutzers nach Eingabe eines entsprechenden Steuerungsbefehls "Wegbeschreibung ausgeben" erfolgen.

Eine Ausgabe ist dabei auf verschiedenste Weise möglich, z. B. per Fax, per SMS oder per E-Mail an einen PC oder ein Mobilfunkgerät des Nutzers. Die Koordinaten können vom Nutzer dann verwendet werden, um sie in ein eigenes Navigationssystem, beispielsweise im eigenen Kfz, einzugeben, sofern es sich hierbei um genormte Koordinaten handelt.

Bei einem besonders komfortablen Ausführungsbeispiel werden die ermittelten Standorte bzw. die Wegstrecke direkt an ein Navigationssystem des Nutzers übermittelt. Das automatische Branchen-Auskunftssystem benötigt hierzu natürlich eine entsprechende Schnittstelle, um die Daten an das Navigationssystem zu übermitteln. Eine solche Übergabe ist auch möglich, indem die Standorte bzw. Wegstrecken zunächst an das Endgerät, beispielsweise ein Mobilfunkgerät des Nutzers, übermittelt werden und dann vom Mobilfunkgerät an das Navigationssystem.

Es besteht zum einen die Möglichkeit, dass das Branchen-Auskunftssystem für jeden gefundenen Anbieter die Wege und die dafür benötigte Zeit mit den verschiedensten Verkehrsmitteln berechnet und dann die jeweils kürzeste Wegstrecke oder die kürzeste Zeit und das dazugehörige Verkehrsmittel für den weiteren Vergleich mit den anderen Anbietern auswählt. Alternativ ist es natürlich auch möglich, dass der Nutzer vorab das von ihm vorzugsweise benutzte Verkehrsmittel mittels entsprechender Steuerbefehle angibt.

Die Beschränkung auf ein bestimmtes Verkehrsmittel verringert den Rechenaufwand und somit die Zeit, die das System benötigt, um die geeigneten Anbieter herauszusuchen und zur Ausgabe zu sortieren.

Eine weitere Reduzierung der Rechen- und Abfragezeit wird bei einer besonders bevorzugten Ausführungsform der Erfindung dadurch erreicht, dass zumindest in den Fällen, bei denen bei einer Suche mehr als eine vorgegebene Maximalzahl von Anbietern gefunden werden, zunächst für jeden der Anbieter der direkte räumliche Punkt-zu-Punkt-Abstand zwischen den Standorten ermittelt wird Anhand dieses direkten Abstands wird dann eine Vorselektion durchgeführt, so dass nur für die Anbieter innerhalb eines bestimmten Umkreises um den Standort des Nutzers oder nur für eine bestimmte Anzahl von Anbietern, welche den kleinsten direkten Abstand zum Nutzer aufweisen, überhaupt das Entfernungsmaß in der etwas aufwändigeren Weise ermittelt werden.
Eine weitere Reduzierung der Zeit bei einer Abfrags kann dadurch erreicht werden, dass zwischen verschiedensten Standorten, beispielsweise innerhalb eines Stadtgebiets, vorab Entfernungsmaße und/oder Wegstrecken ermittelt werden und in einer Datenbank, beispielsweise in einer einfachen Tabelle, hinterlegt werden. Bei einer Suche eines Anbieters für einen Nutzer werden dann die erforderlichen Entfernungsmaße bzw. Wegstrecken zwischen dem Standort des Nutzers und dem Standort des jeweiligen gefundenen Anbieters mit Hilfe der Datenbank ermittelt. Um den Speicherplatz gering zu halten, ist es hierbei sinnvoll, ggf. nur die entlang der ermittelten Wegstrecke berechneten Entfernungsmaße zu hinterlegen und anhand dieser Entfernungsmaße die Auswahl und Sortierung durchzuführen und letztendlich, sofern die Wegstrecke für eine komfortable Ausgabe an den Nutzer benötigt wird, für den ausgewählten Anbieter die Wegstrecke noch einmal aktuell zu ermitteln. Eine solche Datenbank mit vorberechneten Abstandsmaßen muss nicht allzu oft aktualisiert werden, da sich ja die Entfernungen, die lediglich von den festliegenden Standorten und dem gegebenen Verkehrsnetz abhängen, kaum ändern. Hierbei werden beispielsweise als Standorte die verschiedenen Straßen einer Stadt bzw. bei längeren Straßen auch bestimmte Straßenabschnitte verwendet. Ein anrufender Nutzer wird dann einem dieser Standorte zugeordnet. Eine solche Datenbank kann auch dynamisch während einer bzw. während mehrerer nacheinanderfolgenden Abfragen auch über einen längeren Zeitraum erzeugt werden

Die Verwendung einer solchen einfachen Datenbank bietet sich insbesondere dann an, wenn zunächst anhand der Koordinaten der Standorte auf einfache Weise durch eine Luftlinienentfernung bestimmt wird, und nur für den Anbieter unterhalb einer bestimmten Luftlinienentfernung überhaupt die genaue Entfernung gemäß der Wegstrecke ermittelt wird In diesem Fall gibt es zu jedem Standort nur eine begrenzte Anzahl anderer Standorte, für die jeweils Entfernungsmaße bzw. Wegstrecken zu hinterlegen sind.

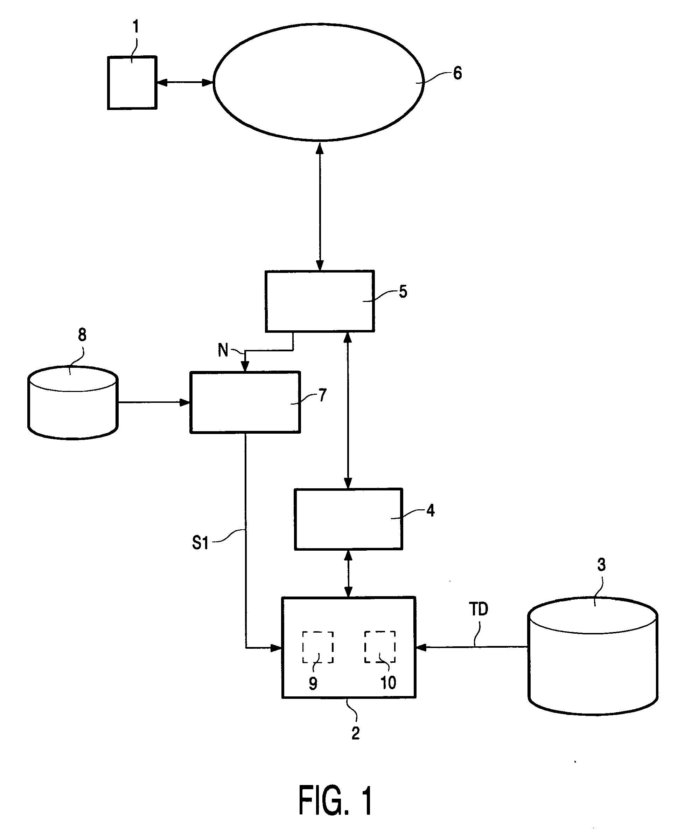

Die Erfindung wird im Folgenden unter Hinweis auf die beigefügte Figur anhand von Ausführungsbeispielen näher erläutert. Die nachfolgend dargestellten Merkmale und die bereits oben beschriebenen Merkmale können nicht nur in den genannten Kombinationen, sondern auch einzeln oder in anderen Kombinationen erfindungswesentlich sein.

Die einzige Figur zeigt ein Ausführungsbeispiel eines automatischen Branchen-Auskunftssystems für ein Telefonnetz 6. Der Nutzer kann über sein Endgerät 1, beispielsweise ein normales Telefon, über dieses Telefonnetz 6 mit dem Branchen-Auskunftssystem in Verbindung treten. Hierzu weist das Branchen-Auskunftssystem eine Netzanschlussstelle 5 auf, welche mit dem Telefonnetz 6 verbunden ist.

Die Umsetzung der über das Endgerät 1, das Telefonnetz 6 sowie die Netzanschlussstelle 5 übertragenen Sprache des Nutzers erfolgt in einem Dialogsystem 4, welches eine Spracherkennungseinrichtung aufweist, um die Sprache in für das System verarbeitbare Informationen, beispielsweise Textinformationen bzw. maschinenlesbare Informationen, umzuwandeln. Diese Informationen werden dann an eine Sucheinrichtung 2 weitergeleitet, welche anhand der über das Endgerät 1, das Telefonnetz 6, die Netzanschlussstelle 5 und das Dialogsystem 4 erhaltenen Suchparameter, d. h die Suchkriterien und Suchbegriffe, die Teilnehmerdaten TD von Anbietern der gewünschten Branche, beispielsweise in einem bestimmten Ort, aus einer Datenbank 3 auswählt.

Die Netzanschlussstelle 5 stellt außerdem an einem weiteren Ausgang die über das Telefonnetz 6 zusätzlich empfangene, vom Anbieter des Telefonnetzes zur Verfügung gestellte Telefonnummer N des Endgeräts 1 des Nutzers zur Verfügung Die Telefonnummer wird in einer CLID-Einrichtung 7 mit einer dazugehörigen Datenbank 8 dazu verwendet, um die Adresse des Nutzers bzw. des Standorts des Endgeräts zu erfahren. Diese Standortinformationen SI über das Endgerät werden ebenfalls zur Sucheinrichtung 2 geleitet. Wird keine Rufnummer übermittelt, so wird automatisch durch das Dialogsystem 4 die Adresse vom Nutzer erfragt.

Die Standortinformationen über das Endgerät 1 und die Standortinformationen über die einzelnen Anbieter, welche in der Datenbank 3 gemeinsam mit bzw. als Teil der Teilnehmerdaten, beispielsweise als Adressen, hinterlegt sind, werden in einer Wegstreckenermittlungseinrichtung 9 innerhalb der Sucheinrichtung 2 genutzt, um für jeden Anbieter die genaue Wegstrecke zu berechnen, die der Nutzer in einem gegebenen Verkehrsnetz mit einem gegebenen Verkehrsmittel zurückzulegen hätte, um den Anbieter zu erreichen

In einer nachfolgenden Selektions- und Sortiereinrichtung 10 werden dann die Teilnehmerdaten der gefundenen Anbieter selektiert und sortiert, so dass beispielsweise nur die Teilnehmerdaten TD der fünf Anbieter herausgegeben werden, die die kürzeste zurückzulegende Entfernung zum Nutzer aufweisen, wobei die Ausgabe in aufsteigender Reihenfolge bezüglich der Entfernung erfolgt. D. h es werden zunächst die Daten des Anbieters ausgegeben, welcher am nächsten am Nutzer liegt und dann die Daten des Anbieters, der sich am zweitnächsten am Nutzer liegt usw.

Die Informationen werden zur Ausgabe im Dialogsystem 4 wieder in Sprache umgesetzt. Hierzu weist das Dialogsystem 4 einen Sprachsynthesizer auf, der aus Sprachbruchstücken die jeweiligen gewünschten Sätze bzw. Worte zusammenstellt. Anschließend erfolgt die Ausgabe wieder über die Netzanschlussstelle 5 und das Telefonnetz 6 zum Endgerät 1 des Nutzers.

Bei der Wegstreckenermittlungseinrichtung 9 und der Selektions- und Sortiereinrichtung 10 handelt es sich im vorliegenden Fall um softwaremäßige Realisierung, welche als Unterroutinen innerhalb der Sucheinrichtung 2, welche ebenfalls in Form von Software auf einem geeigneten Rechner realisiert ist, integriert sind Diese beiden Einrichtungen sind daher nur der Anschaulichkeit halber als Blöcke innerhalb der Sucheinrichtung 2 in der Figur dargestellt. Ebenso können aber auch die CLID-Einrichtung 7 sowie das Dialogsystem 4 mit der automatischen Spracherkennung und dem Sprachsynthesizer zumindest teilweise in Form von Software realisiert sein und gemeinsam mit den zugehörigen Datenbanken 3 und 8 in einem einzelnen Server untergebracht sein. Auch die Netzanschlussstelle kann beispielsweise als Steckkarte in diesem Rechner integriert sein, welcher selbstverständlich dann entsprechende Software zum Betrieb dieser Netzanschlussstelle aufweisen muss.

Bei einem nicht dargestellten Ausführungsbeispiel wird über die Netzanschlussstelle auch die Wegbeschreibung ausgegeben. Diese Ausgabe erfolgt vorzugsweise schriftlich, beispielsweise in Form einer SMS, eines Faxes oder E-Mail. Die Übermittlung kann hierbei entweder über das Telefonnetz 6 oder auch über das Internet erfolgen. Hierzu ist lediglich erforderlich, dass dem Branchen-Auskunftssystem über das Endgerät 1 mitgeteilt wird, an welches Gerät bzw. welche E-Mail-Adresse oder welche Faxnummer die Ausgabe der Wegstrecke erfolgen soll. Ebenso ist auch ein Transfer in ein Navigationssystem, beispielsweise eine Kfz-Navigationseinrichtung, des Nutzers möglich.

Bei der Wegstreckenermittlungseinrichtung kann es sich im Prinzip um eine beliebige geeignete handelsübliche Navigationssoftware handeln.

Bei einem besonders einfachen Ausführungpbeispiel werden vorher ermittelte Entfernungsmaße für eine Vielzahl von Paaren, vorzugsweise für alle möglichen Paare, von beliebigen Standorten, beispielsweise den Straßen oder auch bestimmten Straßenabschnitten einer Stadt in einer gesonderten Datenbank (nicht dargestellt) gespeichert. Über die CLID-Einrichtung erhält das System die Adresse des Standorts des Endgeräts 1 des Nutzers. Die Adresse der jeweiligen Anbieter ist in den Teilnehmerdaten enthalten. Anhand der Adresse bzw. der Straßen kann dann auf die gespeicherte Tabelle zugsgriffen werden und somit das zuvor definierte Abstandsmaß ermittelt werden. Die Sortierung und Selektion kann dann anhand des so auf einfache Weise gefundenen Entfernungsmaßes erfolgen. Erfindungsgemäß ist dieses Entfernungsmaß natürlich so gewählt, dass es der tatsächlich zurückzulegenden Entfernung bzw. der Zeit entspricht. Soll eine Wegbeschreibung mit ausgegeben werden, muss in dieser Tabelle neben dem Entfernungsmaß auch die Wegbeschreibung zwischen den jeweiligen Orten gespeichert werden.

Mit dem erfindungsgemäßen Verfahren ist es dem Branchen-Auskunftssystem möglich, dem Nutzer einen Eintrag aus der gesuchten Branche zu liefern, der möglichst nah an seinem Standort liegt und auf möglichst kurzem Weg erreichbar ist, wobei die realen Bedingungen des Verkehrsnetzes berücksichtigt werden.

## Patentansprüche

1. Verfahren zum Betrieb eines automatischen Branchen-Auskunftssystems, bei welchem anhand von Suchparametern, die mittels eines Endgerätes (1) eines Nutzers an das System übermittelt werden, Anbieter einer gewünschten Branche gesucht werden, deren in einer Datenbank (3) des Systems gespeicherte Teilnehmerdaten (TD) den Suchparametern entsprechen, und bei dem dann Teilnehmerdaten (TD) zumindest eines gefundenen Anbieters an den Nutzer ausgegeben werden, wobei
Informationen (SI) über den aktuellen Standort des Nutzers ermittelt werden,
Informationen über die Standorte der gefundenen Anbieter ermittelt werden,
anhand der Standortinformationen des Nutzers und des jeweiligen Anbieters für jeden Anbieter zumindest ein räumliches Entfernungsmaß ermittelt wird, welches einer vom Anbieter zum Nutzer in einem gegebenen Verkehrsnetz mit einem gegebenen Verkehrsmittel zurückzulegenden Wegstrecke oder einer dazu mit dem jeweiligen Verkehrsmittel benötigten Zeit entspricht,
und eine Ausgabe der Teilnehmerdaten der jeweiligen Anbieter an den Nutzer in Abhängigkeit von den zugehörigen Entfernungsmaßen erfolgt,
**dadurch gekennzeichnet, dass**
zumindest dann, wenn bei einer Suche mehr als eine vorgegebene Zahl von Anbietern gefunden wird, zunächst für jeden der Anbieter ein direkter räumlicher Abstand zum Standort des Nutzers ermittelt wird und nur für eine bestimmte Anzahl der Anbieter mit den kleinsten direkten räumlichen Abständen und/oder nur für die Anbieter, deren direkter räumlicher Abstand unterhalb eines vorgegebenen Maximalwerts liegt, ein Entfernungsmaß ermittelt wird.

2. Verfähren nach Anspruch 1,
**dadurch gekennzeichnet, dass** zwischen verschiedensten Standorten vorab Entfernungsmaße und/oder Wegstrecken ermittelt und in einer Datenbank hinterlegt werden und bei einer Suche eines Anbieters für einen Nutzer die erforderlichen Entfernungsmaße und/oder Wegstrecken zwischen dem Standort des Nutzers und dem Standort des jeweiligen gefundenen Anbieters mit Hilfe der Datenbank ermittelt werden.

3. Verfahren nach Anspruch 1 oder 2, **dadurch gekennzeichnet, dass** die Abfrage der Suchparameter und/oder eine Steuerung des automatischen Branchen-Auskunfftssystems durch den Nutzer unter Verwendung eines Nutzer-Dialogsystems (4) mit einer automatischen Spracherkennung und mit Mitteln zur Ausgabe von Eingabeaufforderungen und/oder der gefundenen Teilnehmerdaten des Anbieters der gewünschten Branche erfolgt.

4. Verfahren nach einem der Ansprüche 1 bis 3, **dadurch gekennzeichnet, dass** nur die Teilnehmerdaten einer bestimmten Anzahl von Anbietern mit den kleinsten Entfernungsmaßen ausgegeben werden und/oder nur die Teilnehmerdaten der Anbieter ausgegeben werden, deren Entfernungsmaß unterhalb eines vorgegebenen Maximalwerts liegt.

5. Verfahren nach einem der Ansprüche 1 bis 4, **dadurch gekennzeichnet, dass** die Ermittlung der Wegstrecke für ein vom Nutzer mittels eines Steuerbefehls vorgegebenes Verkehrsmittel erfolgt.

6. Verfahren nach einem der Ansprüche 1 bis 5, **dadurch gekennzeichnet, dass** mittels eines Steuerungsbefehls vom Nutzer vorgegeben wird, ob die Ausgabe der Teilnehmerdaten der jeweiligen Anbieter in Abhängigkeit von der Länge der Wegstrecke oder in Abhängigkeit von der benötigten Zeit zum Zurücklegen der Wegstrecke erfolgt.

7. Verfahren nach einem der Ansprüche 1 bis 6, **dadurch gekennzeichnet, dass** zusätzlich zu den Teilnehmerdaten die ermittelten Standorte und/oder Wegstrecken ausgegeben werden.

8. Verfahren nach Anspruch 7, **dadurch gekennzeichnet, dass** die ermittelten Standorte und/oder Wegstrecken an ein Navigationssystem des Nutzers übermittelt werden.

9. Verfahren nach einem der Ansprüche 1 bis 8, **dadurch gekennzeichnet, dass** die Informationen über den aktuellen Standort des Nutzers mittels eines. Anruferidentifizierungssystems und/oder durch eine Abfrage der aktuellen Standortdaten vom Nutzer und/oder unter Nutzung eines Mobilfunk-Standortermittlungssystems ermittelt werden.

10. Automatisches Branchen-Auskunftssystem, welches zur Benutzung mit einem Endgerät (1) eines Nutzers verbunden ist, mit
- einer Datenbank (3), in der Teilnehmerdaten (TD) einer Vielzahl von Anbietern verschiedener Branchen gespeichert sind,
- mit Mitteln (1,6, 5, 4) zur Eingabe von Suchparametern durch den Nutzer
- mit einer Sucheinrichtung (2) zum Suchen von Anbietern der gewünschten Branche in der Datenbank (3) anhand der Suchparameter und der Teilnehmerdaten (TD)
- mit Mitteln (4, 5, 6, 1) zur Ausgabe des Teilnelenerdaten (TD) zumindest eines gefundenen Anbieters der gewünschten Branche,
- mit Mitteln (3, 7, 8) zur Ermittlung von Informationen (SI) über die aktuellen Standorte des Nutzers und der gefundenen Anbieter,
- mit einer Wegstreckenermittlungseinrichtung (9), um anhand der Standortinformationen (SI) des Nutzers und des jeweiligen Anbieters für jeden Anbieter zumindest ein räumliches Entfernungsmaß zu ermitteln, welches einer vom Anbieter zum Nutzer in einem gegebenen. Verkehrsnetz mit einem gegebenen Verkehrsmittel zurückzulegenden Wegstrecke oder einer dazu mit dem jeweiligen Verkehrsmittel benötigten Zeit entspricht,
- und mit einer Selektions- und/oder Sortiereinrichtung (10), um die Teilnehmerdaten (TD) der gefundenen Anbieter in Abhängigkeit von den jeweils zugehörigen Entfernungsmaßen zur Ausgabe an den Nutzer auszuwählen und zu sortieren,
**gekennzeichnet durch**
Mittel zur Bestimmung eines direkten räumlichen Abstands vom Standort des jeweiligen Anbieter zum Standort des Nutzers und zur Vorauswahl der Anbieter, für die ein Entfernungsmaß mittels der Wegstreckenermittlungseinrichtung (9) ermittelt wird, in Abhängigkeit von dem jeweiligen direkten räumlichen Abstand sowie in Abhängigkeit von einem vorgegebenen Maximalwert für den direkten räumlichen Abstand und/oder einer vorgegebenen maximalen Anzahl von Anbieter.

11. System nach Anspruch 10, **gekennzeichnet durch** einen Speicher, in welchem Entfernungsmaße und/oder Wegstrecken zwischen einer Vielzahl von Standorten gespeichert sind.

12. System nach Anspruch 10 oder 11, **gekennzeichnet durch** ein Dialogsystem (4) zur Steuerung des automatischen Branchen-Auskunftssystems **durch** den Nutzer und zur Abfrage der Suchparameter, mit einer automatischen Spracherkennung und mit Mitteln zur Ausgabe von Eingabeaufforderungen und/oder der gefundenen Teilnehmerdaten des gewünschten Teilnehmers.

13. System nach einem der Ansprüche 10 bis 12, **gekennzeichnet durch** eine Schnittstelle zum Übermitteln zumindest eines ermittelten Standorts und/oder einer Wegstrecke an ein Navigationssystem des Nutzers.

## Claims

1. A method for operating an automatic industry information system, in which on the basis of search parameters which are transmitted to the system by means of a terminal (1) of a user, suppliers of a particular industry are sought, whose subscriber data (TD) stored in a database (3) of the system correspond to the search parameters, and in which subscriber data (TD) of at least one found supplier are then output to the user, wherein
information (SI) about the current location of the user are determined,
information about the locations of the found suppliers are determined,
on the basis of the location information of the user and of the respective supplier for each supplier, at least one spatial distance measure is determined, which corresponds to a route to be covered from the supplier to the user in a given transport network with a given transport means or a time required for the same with the respective transport means,
and an output of the subscriber data of the respective supplier to the user takes place as a function of the associated distance measures,
**characterised in that**
at least if more than a predetermined number of suppliers is found during a search, initially for each of the suppliers, a direct spatial distance from the location of the user is determined and a distance measure is determined only for a certain number of suppliers with the smallest direct spatial distances and/or only for the suppliers whose direct spatial distance lies below a predetermined maximum value.

2. The method according to Claim 1, **characterised in that** between a wide range of locations, distance measures and/or routes are determined in advance and stored in a database and during a search of a supplier for a user, the required distance measures and/or routes between the location of the user and the location of the respective found supplier are determined with the aid of the database.

3. The method according to Claim 1 or 2, **characterised in that** the query of the search parameters and/or a controlling of the automatic industry information system by the user takes place using a user dialogue system (4) with automatic speech recognition and with means for outputting input prompts and/or the found subscriber data of the supplier of the desired industry.

4. The method according to one of Claims 1 to 3, **characterised in that** only the subscriber data of a certain number of suppliers with the smallest distance measures are output and/or only the subscriber data of the suppliers whose distance measure lies below a predetermined maximum value are output.

5. The method according to one of Claims 1 to 4, **characterised in that** the determination of the route for a transport means predefined by the user by means of a command takes place.

6. The method according to one of Claims 1 to 5, **characterised in that** whether the output of the subscriber data of the respective suppliers takes place as a function of the length of the route or as a function of the required time for covering the route is predefined by the user by means of a command.

7. The method according to one of Claims 1 to 6, **characterised in that** the determined locations and/or routes are output in addition to the subscriber data.

8. The method according to Claim 7, **characterised in that** the determined locations and/or routes are transmitted to a navigation system of the user.

9. The method according to one of Claims 1 to 8, **characterised in that** the information about the current location of the user is determined by means of a caller identification system and/or by means of a querying of the current location data of the user and/or using a mobile communications location determination system.

10. An automatic industry information system which for use is connected to a terminal (1) of a user, with
- a database (3) in which subscriber data (TD) of a multiplicity of suppliers of various industries are stored,
- with means (1, 6, 5, 4) for inputting search parameters by of the user
- with a search apparatus (2) for searching for suppliers of the desired industry in the database (3) on the basis of the search parameters and the subscriber data (TD)
- with means (4, 5, 6, 1) for outputting the subscriber data (TD) at least of one found supplier of the desired industry,
- with means (3, 7, 8) for determining information (SI) about the current locations of the user and the found suppliers,
- with a route determination apparatus (9) in order to determine at least one spatial distance measure, which corresponds to a route to be covered from the supplier to the user in a given transport network with a given transport means or a time required for the same with the respective transport means, on the basis of the location information (SI) of the user and of the respective supplier for each supplier,
- and with a selection and/or sorting apparatus (10) in order to select and to sort the subscriber data (TD) of the found suppliers as a function of the respectively associated distance measures for outputting to the user,
**characterised by**
means for determining a direct spatial distance from the location of the respective supplier from the location of the user and to preselect the supplier for which a distance measure is determined by means of the route determination apparatus (9) as a function of the respective direct spatial distance and also as a function of a predetermined maximum value for the direct spatial distance and/or a predetermined maximum number of suppliers.

11. The system according to Claim 10, **characterised by** a memory in which distance measures and/or routes between a multiplicity of locations are stored.

12. The system according to Claim 10 or 11, **characterised by** a dialogue system (4) for controlling the automatic industry information system by the user and for querying the search parameters, with automatic speech recognition and with means for outputting input prompts and/or the found subscriber data of the supplier of the desired subscriber.

13. The system according to one of Claims 10 to 12, **characterised by** an interface for transmitting at least one determined location and/or a route to a navigation system of the user.

## Revendications

1. Procédé pour le fonctionnement d'un système d'information automatique par branche, dans lequel on recherche à l'aide de paramètres de recherche, qui sont transmis au moyen d'un terminal (1) d'un utilisateur au système, des prestataires d'une branche souhaitée, dont des données d'abonnés (TD) stockées dans une banque de données (3) du système correspondent aux paramètres de recherche, et dans lequel des données d'abonnés (TD) d'au moins un prestataire trouvé sont transmises ensuite à l'utilisateur,
dans lequel des informations (SI) concernant l'emplacement actuel de l'utilisateur sont déterminées, des informations concernant les emplacements des prestataires trouvés sont déterminées,
au moins une cote de distance dans l'espace est déterminée à l'aide des informations d'emplacement de l'utilisateur et du prestataire concerné pour chaque prestataire, laquelle cote correspond à un tronçon de course à parcourir depuis le prestataire jusqu'à l'utilisateur dans un réseau de communications donné avec un moyen de transport donné ou correspond à un temps utilisé à cet effet avec le moyen de transport concerné,
et une transmission des données d'abonnés des prestataires concernés à l'utilisateur s'effectuant en fonction des cotes de distance spécifiques,
**caractérisé en ce que**,
au moins dans les cas où on trouve lors d'une recherche plus d'un nombre prédéfini de prestataires, on détermine d'abord pour chacun des prestataires une distance directe dans l'espace jusqu'à l'emplacement de l'utilisateur et une cote de distance est déterminée uniquement pour un nombre défini des prestataires présentant les plus petites distances directes dans l'espace et/ou seulement pour les prestataires, dont la distance directe dans l'espace est inférieure à une valeur maximale prédéfinie.

2. Procédé selon la revendication 1, **caractérisé en ce que** des cotes de distance et/ou des tronçons de course sont déterminés auparavant entre des emplacements très divers et sont déposés dans une banque de données et, lors d'une recherche d'un prestataire pour un utilisateur, les cotes de distance et/ou tronçons de course indispensables entre l'emplacement de l'utilisateur et l'emplacement du prestataire trouvé respectif sont déterminés à l'aide de la banque de données.

3. Procédé selon la revendication 1 ou 2, **caractérisé en ce que** l'interrogation des paramètres de recherche et/ou une commande du système d'information automatique par branche s'effectue(nt) par l'utilisateur en utilisant un système de dialogue avec l'utilisateur (4) avec une reconnaissance vocale automatique et avec des moyens pour l'édition de demandes d'entrée et/ou des données d'abonné trouvées du prestataire de la branche souhaitée.

4. Procédé selon l'une des revendications 1 à 3, **caractérisé en ce que** seules les données d'abonné d'un nombre défini de prestataires présentant les cotes de distance les plus faibles sont éditées et/ou seules les données d'abonnés des prestataires, dont la cote de distance est inférieure à une valeur maximale prédéfinie, sont éditées.

5. Procédé selon l'une des revendications 1 à 4, **caractérisé en ce que** la détermination du tronçon de course pour un moyen de transport prédéfini par l'utilisateur au moyen d'une instruction de commande est effectuée.

6. Procédé selon l'une des revendications 1 à 5, **caractérisé en ce que** l'utilisateur prédéfinit au moyen d'une instruction de commande si l'édition des données d'abonnés des prestataires respectifs s'effectue en fonction de la longueur du tronçon de course ou en fonction du temps utilisé pour parcourir le tronçon de course.

7. Procédé selon l'une des revendications 1 à 6, **caractérisé en ce que** les emplacements et/ou tronçons de course déterminés sont édités en supplément des données d'abonnés.

8. Procédé selon la revendication 7, **caractérisé en ce que** les emplacements et/ou tronçons de course déterminés sont transmis à un système de navigation de l'utilisateur.

9. Procédé selon l'une des revendications 1 à 8, **caractérisé en ce que** les informations concernant l'emplacement actuel de l'utilisateur sont déterminées au moyen d'un système d'identification d'appelant et/ou par une interrogation des données d'emplacement actuelles par l'utilisateur et/ou en utilisant un système de détermination d'emplacement par téléphonie mobile.

10. Système d'information automatique par branche, qui est relié à un terminal (1) d'un utilisateur pour l'utilisation, comprenant
- une banque de données (3), dans laquelle des données d'abonnés (TD) d'une pluralité de prestataires de différentes branches sont stockées,
- des moyens (1, 6, 5, 4) pour l'entrée de paramètres de recherche par l'utilisateur,
- un dispositif de recherche (2) pour la recherche de prestataires de la branche souhaitée dans la banque de données (3) à l'aide des paramètres de recherche et des données d'abonnés (TD),
- des moyens (4, 5, 6, 1) pour l'édition des données d'abonnés (TD) d'au moins un prestataire trouvé de la branche souhaitée,
- des moyens (3, 7, 8) pour la détermination d'informations sur les emplacements actuels de l'utilisateur et des prestataires trouvés,
- un dispositif de détermination de tronçon de course (9) pour déterminer, à l'aide des informations d'emplacement (SI) de l'utilisateur et du prestataire respectif pour chaque prestataire, au moins une cote de distance dans l'espace, qui correspond à un tronçon de course à parcourir depuis le prestataire jusqu'à l'utilisateur dans un réseau de communications donné avec un moyen de transport donné ou à un temps nécessaire à cet effet avec le moyen de transport concerné,
- et un dispositif de sélection et/ou de tri (10) pour sélectionner et trier les données d'abonné (TD) des prestataires trouvés en fonction des cotes de distance respectivement spécifiques pour les transmettre à l'utilisateur,
**caractérisé par**
des moyens pour déterminer une distance directe dans l'espace depuis l'emplacement du prestataire concerné jusqu'à l'emplacement de l'utilisateur et pour présélectionner les prestataires pour lesquels on détermine une cote de distance au moyen du système de détermination de tronçon de course (9), en fonction de la distance directe respective dans l'espace et en fonction d'une valeur maximale prédéfinie pour la distance directe dans l'espace et/ou d'un nombre maximum prédéfini de prestataires.

11. Système selon la revendication 10, **caractérisé par** une mémoire, dans laquelle des cotes de distance et/ou des tronçons de course entre une pluralité d'emplacements sont mémorisés.

12. Système selon la revendication 10 ou 11, **caractérisé par** un système de dialogue (4) pour la commande du système d'information automatique par branche par l'utilisateur et pour l'interrogation des paramètres de recherche, avec une reconnaissance vocale automatique et avec des moyens pour l'édition de demandes d'entrée et/ou des données d'abonnés trouvées de l'abonné souhaité.

13. Système selon l'une des revendications 10 à 12, **caractérisé par** une interface pour la transmission d'au moins un emplacement déterminé et/ou d'un tronçon de course à un système de navigation de l'utilisateur.
